# EUROPEAN PATENT APPLICATION

(11) **EP 2 357 508 A1**
(43) Date of publication of application: **17.08.2011**
(21) Application number: 10015980.5
(22) Date of filing: 22.12.2010
(51) Int. Cl.: G02B 27/22, H04N 13/00, G09G 3/20

(54) **Controlling a pixel array to support an adaptable light manipulator**

(30) Priority: 31.12.2009 US 291818 P; 10.02.2010 US 303119 P; 05.05.2010 US 774225
(71) Applicant: Broadcom Corporation, Irvine, CA 92617 (US)
(72) Inventor: Bennett, James D., 36301 Hroznetin (CZ); Karaoguz, Jeyhan, 92606 Irvine, CA (US)
(74) Representative: Jehle, Volker Armin

(57) **Abstract**

A display system is provided that enables three-dimensional images to be displayed. The display system includes an adaptable light manipulator positioned proximate to an image generator to provide an image to a viewer based on light that is received from the image generator. The image generator includes a pixel array. A display controller controls the pixel array to compensate for modification of a configuration of the adaptable light manipulator. The pixel array includes a plurality of display pixels. A plurality of image pixels is rendered to a plurality of respective subsets of the display pixels. The display controller is capable of changing a number of display pixels that represents each image pixel and/or which display pixels or groups thereof correspond to the respective image pixels.

## Description

### CROSS-REFERENCE TO RELATED APPLICATIONS

This application claims the benefit of U.S. Provisional Application No. 61/291,818, filed December 31, 2009, and U.S. Provisional Application No. 61/303,119, filed February 10, 2010, the entireties of which are incorporated by reference herein.

### BACKGROUND OF THE INVENTION

### Field of the Invention

The present invention relates to techniques for displaying images.

### Background Art

Images may be transmitted for display in various forms. For instance, television (TV) is a widely used telecommunication medium for transmitting and displaying images in monochromatic ("black and white") or color form. Conventionally, images are provided in analog form and are displayed by display devices in the form of two-dimensional images. More recently, images are being provided in digital form for display in two-dimensions on display devices having improved resolution. Even more recently, images capable of being displayed in three-dimensions are being provided.

A parallax barrier is one example of a device that enables images to be displayed in three-dimensions. A parallax barrier includes of a layer of material with a series of precision slits. The parallax barrier is placed proximate to a display so that a viewer's eyes each see a different set of pixels to create a sense of depth through parallax. A lenticular lens is another example of a device that enables images to be displayed in three-dimensions. A lenticular lens includes an array of sub-lenses. As with the parallax barrier, placement of the lenticular lens proximate to an array of pixels enables a viewer's eyes to each see a different set of the pixels. A disadvantage of parallax barriers and lenticular lenses is that the viewer must be positioned in a well-defined location in order to experience the three-dimensional effect. If the viewer moves his/her eyes away from this "sweet spot," image flipping and/or exacerbation of the eyestrain, headaches and nausea that may be associated with prolonged three-dimensional image viewing may result. Conventional three-dimensional LCD displays that utilize parallax barriers are also constrained in that the displays must be entirely in a two-dimensional image mode or a three-dimensional image mode at any time. Moreover, conventional three-dimensional LCD displays that utilize lenticular lenses typically are capable of displaying only three-dimensional images.

Commonly-owned, co-pending U.S. Patent Application Serial Nos. XX/XXX,XXX and YY/YYY,YYY present innovative two-dimensional/three-dimensional viewing displays that include adaptable light manipulators to address the aforementioned issues associated with conventional three-dimensional LCD displays that utilize parallax barriers or lenticular lenses. An adaptable light manipulator is a light manipulator (e.g., parallax barrier, lenticular lens, etc.) that is capable of being dynamically modified to accommodate changed circumstances. For example, the viewing displays of U.S. Patent Application Serial No. XX/XXX,XXX include a parallax barrier that may be dynamically modified in order to adaptively accommodate, for example, a changing viewer sweet spot, switching between two-dimensional images, three-dimensional images, and multi-view three-dimensional content, and the simultaneous display of two-dimensional images, three-dimensional images and multi-view three-dimensional content. The viewing displays of U.S. Patent Application Serial No. YY/YYY,YYY include an elastic light manipulator (e.g., an elastic parallax barrier, an elastic lenticular lens, etc.) that may be stretched in order to adaptively accommodate, for example, a changing viewer sweet spot and/or that may be retracted to adaptively accommodate, for example, a two-dimensional image mode. However, modifying a configuration of an adaptable light manipulator may negatively affect accuracy of an image as perceived by a viewer.

### BRIEF SUMMARY OF THE INVENTION

Methods, systems, and apparatuses are described for controlling a pixel array to support an adaptable light manipulator substantially as shown in and/or described herein in connection with at least one of the figures, as set forth more completely in the claims.
According to an aspect, a display system comprises:
a pixel array that includes a plurality of display pixels;
an adaptable light manipulator configured to manipulate light that is received from the pixel array;
a manipulator controller configured to modify a configuration of the adaptable light manipulator; and
a pixel array controller configured to change a mapping of a plurality of image pixels from a plurality of respective first subsets of the display pixels to a plurality of respective second subsets of the display pixels in the pixel array to compensate for modification of the configuration of the adaptable light manipulator.
Advantageously, each of the first subsets and each of the second subsets includes N display pixels; and
wherein N is an integer.
Advantageously, each of the first subsets includes N display pixels;
wherein each of the second subsets includes M display pixels;
wherein N and M are integers; and
wherein N is not equal to M.
Advantageously, the pixel array controller is configured to change the mapping of the plurality of image pixels to switch operation of the display system from a first mode in which the pixel array provides B three-dimensional images each of which uses a respective 1/B of the plurality of display pixels to a second mode in which the pixel array provides C three-dimensional images each of which uses a respective 1/C of the plurality of display pixels;
wherein B and C are integers; and
wherein B is not equal to C.
Advantageously, the display system further comprises:
a locator configured to determine that a position of a user with respect to the pixel array is changed;
wherein the manipulator controller is configured to modify the configuration of the adaptable light manipulator in response to determination that the position of the user with respect to the pixel array is changed; and
wherein the pixel array controller is configured to change the mapping of the plurality of image pixels from the plurality of respective first subsets of the display pixels to the plurality of respective second subsets of the display pixels in the pixel array in response to the determination that the position of the user with respect to the pixel array is changed.
Advantageously, the display system further comprises:
a locator configured to determine that an orientation of a user's head with respect to the pixel array is changed;
wherein the manipulator controller is configured to modify the configuration of the adaptable light manipulator in response to determination that the orientation of the user's head with respect to the pixel array is changed; and
wherein the pixel array controller is configured to change the mapping of the plurality of image pixels from the plurality of respective first subsets of the display pixels to the plurality of respective second subsets of the display pixels in the pixel array in response to the determination that the orientation of the user's head with respect to the pixel array is changed.
Advantageously, the adaptable light manipulator includes an adaptable parallax barrier; and
wherein the modification of the configuration of the adaptable light manipulator includes a modification of a slit pattern of the adaptable parallax barrier.
Advantageously, the adaptable light manipulator includes an elastic light manipulator; and
wherein the modification of the configuration of the adaptable light manipulator includes a modification of an extent to which the elastic light manipulator is stretched.
Advantageously, the modification of the configuration of the adaptable light manipulator includes a modification of an orientation of the adaptable light manipulator.
According to an aspect, a display system comprises:
a pixel array that includes a plurality of display pixels;
an adaptable light manipulator configured to manipulate light that is received from the pixel array;
a manipulator controller configured to modify a configuration of the adaptable light manipulator; and
a pixel array controller comprising:
   a conversion module configured to convert a first plurality of image pixels that corresponds to an N-dimensional representation of an image to a second plurality of image pixels that corresponds to an M-dimensional representation of the image, M ≠ N; and
   a mapping module configured to initially render the first plurality of image pixels to the plurality of display pixels, the mapping module further configured to render the second plurality of image pixels in lieu of the first plurality of image pixels to the plurality of display pixels in response to a determination that the configuration of the adaptable light manipulator is modified.
Advantageously, N=2 and M=3.
Advantageously, N=3 and M=2.
Advantageously, the adaptable light manipulator includes an adaptable parallax barrier.
Advantageously, the adaptable light manipulator includes an elastic lenticular lens.
According to an aspect, a method comprises:
modifying a configuration of an adaptable light manipulator that receives light from a pixel array that includes a plurality of display pixels; and
changing a number of the display pixels in the pixel array that represents each image pixel of a plurality of image pixels in response to modifying the configuration of the adaptable light manipulator.
Advantageously, modifying the configuration of the adaptable light manipulator comprises:
modifying a slit pattern of an adaptable parallax barrier.
Advantageously, modifying the configuration of the adaptable light manipulator comprises:
modifying an extent to which an elastic light manipulator is stretched.
Advantageously, changing the number of the display pixels in the pixel array that represents each image pixel of the plurality of image pixels comprises:
switching operation of the pixel array from a first mode in which the pixel array provides B three-dimensional images each of which uses a respective 1/B of the plurality of display pixels to a second mode in which the pixel array provides C three-dimensional images each of which uses a respective 1/C of the plurality of display pixels;
wherein B and C are integers; and
wherein B is not equal to C.
According to an aspect, a method comprises:
modifying a configuration of an adaptable light manipulator that receives light from a pixel array that includes a plurality of display pixels; and
changing subsets of the plurality of display pixels to which respective image pixels are rendered to compensate for the configuration of the adaptable light manipulator being modified.
Advantageously, modifying the configuration of the adaptable light manipulator comprises:
modifying a slit pattern of an adaptable parallax barrier.
Advantageously, modifying the configuration of the adaptable light manipulator comprises:
modifying an extent to which an elastic light manipulator is stretched.
Advantageously, modifying the configuration of the adaptable light manipulator comprises:
modifying an orientation of the adaptable light manipulator.
Advantageously, the method further comprises:
determining that a position of a user with respect to the pixel array is changed;
wherein modifying the configuration of the adaptable light manipulator and changing the subsets of the plurality of display pixels to which the respective image pixels are rendered are performed in response to determining that the position of the user with respect to the pixel array is changed.
Advantageously, the method further comprises:
determining that an orientation of a user's head with respect to the pixel array is changed;
wherein modifying the configuration of the adaptable light manipulator and changing the subsets of the plurality of display pixels to which the respective image pixels are rendered are performed in response to determining that the orientation of the user's head with respect to the pixel array is changed.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.

FIG. 1 shows a block diagram of a display system according to an example embodiment.

FIG. 2 shows a block diagram of an example implementation of a display system shown in FIG. 1 in accordance with an embodiment.

FIG. 3 depicts an example implementation of an adaptable light manipulator shown in FIGS. 1 and 2 that includes an array of elastic sub-lenses in accordance with an embodiment.

FIGS. 4 and 5 depict cross-sectional views of an adaptable light manipulator shown in FIG. 3 in a non-stretched state and in a stretched state, respectively, according to example embodiments.

FIG. 6 depicts a view of a surface of another example implementation of an adaptable light manipulator shown in FIGS. 1 and 2 that includes a plurality of parallax barrier elements in accordance with an embodiment.

FIGS. 7 and 8 depict views of a parallax barrier element of an adaptable light manipulator shown in FIG. 6 that is selected to be transparent and to be opaque, respectively, according to example embodiments.

FIG. 9 depicts a flowchart of a method for generating two-dimensional and/or three-dimensional images in accordance with an example embodiment.

FIG. 10 shows a cross-sectional view of an example implementation of a display system shown in FIG. 2 according to an embodiment.

FIG. 11 depicts a flowchart of another method for generating two-dimensional and/or three-dimensional images in accordance with an example embodiment.

FIG. 12 depicts a cross-sectional view of another example implementation of a display system shown in FIG. 2 according to an embodiment.

FIG. 13 depicts a view of the adaptable light manipulator of FIG. 6 with transparent slits according to an example embodiment.

FIG. 14 shows the display system of FIG. 10 providing a three-dimensional image to a user according to an example embodiment.

FIG. 15 depicts a cross-sectional view of a display system shown in FIG. 2 that provides multiple three-dimensional images according to an example embodiment.

FIG. 16 is a block diagram of an example implementation of a display controller shown in FIG. 2 according to an embodiment.

FIGS. 17-20 depict flowcharts of methods for controlling a pixel array to support an adaptable light manipulator in accordance with example embodiments.

FIGS. 21-23 illustrate mappings of image pixels to display pixels in accordance with example embodiments.

FIGS. 24 and 25 show cross-sectional views of display systems in which a three-dimensional image is provided to a user based on respective first and second mappings of image pixels to display pixels according to example embodiments.

FIG. 26 shows a block diagram of an example computer system in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION OF THE INVENTION

### I. Introduction

The following detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Furthermore, it should be understood that spatial descriptions (e.g., "above," "below," "up," "left," "right," "down," "top," "bottom," "vertical," "horizontal," etc.) used herein are for purposes of illustration only, and that practical implementations of the structures described herein can be spatially arranged in any orientation or manner.

### II. Example Embodiments

Example embodiments relate to controlling a pixel array to support an adaptable light manipulator. The pixel array is included in an image generator. The adaptable light manipulator is positioned proximate to the image generator to provide an image to a viewer based on light that is received from the image generator. The pixel array includes a plurality of pixels, which are referred to as "display pixels". Image pixels are rendered among the display pixels, so that a viewer may perceive the image. Image pixels are representations (i.e., signals, data, etc., or a combination thereof) that define respective portions of an image. Example embodiments are capable of changing a number of display pixels that represents each image pixel and/or which display pixels or groups thereof correspond to the respective image pixels, in response to modification of a configuration of an adaptable light manipulator.

The following subsections describe a variety of example embodiments of the present invention. It will be apparent to persons skilled in the relevant art that various changes in form and detail can be made to the embodiments described herein without departing from the spirit and scope of the invention. Thus, the breadth and scope of the present invention should not be limited by any of the example embodiments described herein.

### A. Example Display System and Method Embodiments

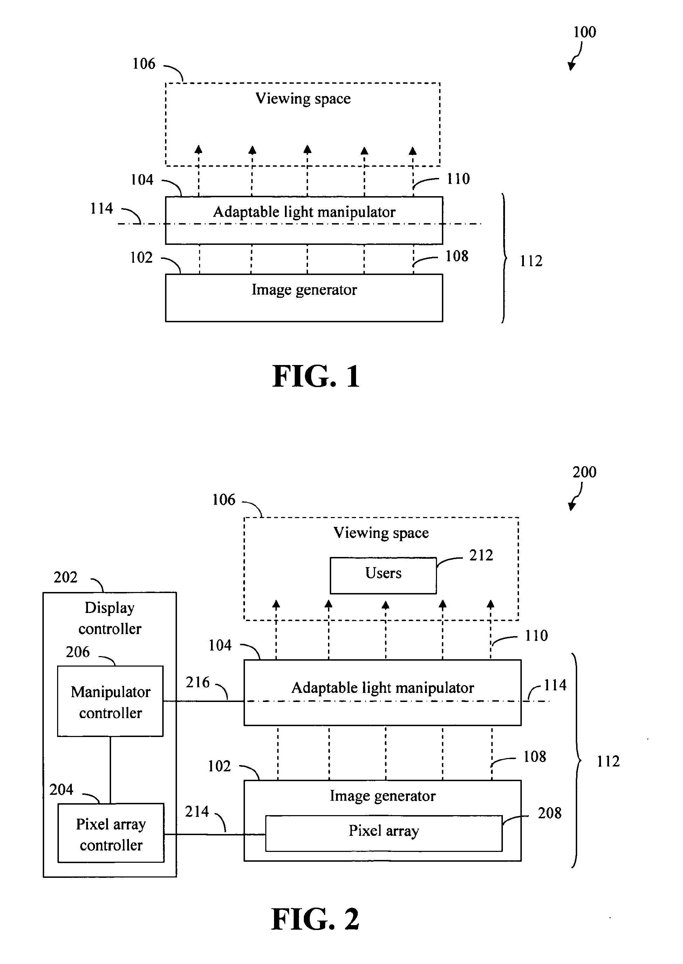

For instance, FIG. 1 shows a block diagram of a display system 100 according to an example embodiment. As shown in FIG. 1, system 100 includes a display device 112. Display device 112 enables the display of 2D and 3D images as described above. Display device 112 includes an image generator 102 and an adaptable light manipulator 104. As shown in FIG. 1, image generator 102 emits video information in the form of light 108. Light 108 is received by adaptable light manipulator 104, which manipulates light 108 to pass manipulated light 110. For example, adaptable light manipulator 104 may include an adaptable parallax barrier. In accordance with this example, adaptable light manipulator 104 may filter light 108 with a plurality of barrier regions that are selectively opaque or transparent. In another example, adaptable light manipulator 104 may include an elastic light manipulator (e.g., an elastic parallax barrier, an elastic lenticular lens, etc.). In accordance with this example, adaptable light manipulator 104 may refract light 108 in accordance with optical properties of adaptable light manipulator 104 that are dependent on an extent to which adaptable light manipulator 104 is stretched along axis 114. Manipulated light 110 includes a plurality of video images formed from the video information included in light 108. For instance, manipulated light 110 may include one or more two-dimensional images and/or one or more three-dimensional images. Manipulated light 110 is received in a viewing space 106 proximate to display device 112. One or more users may be present in viewing space 106 to view the video images included in manipulated light 110.

Display device 112 may be configured in various ways. For instance, display device 112 may be a television display (e.g., an LCD (liquid crystal display) television, a plasma television, etc.), a computer monitor, or any other type of display device. Image generator 102 may be any suitable type of image generating device, including but not limited to an LCD screen, a plasma screen, an LED (light emitting device) screen, etc. Adaptable light manipulator 104 may be any suitable type light manipulating device that is capable of being dynamically modified to accommodate changed circumstances.

Although elastic light manipulators are described herein as being stretched along a single axis (e.g., axis 114) for purposes of illustration, the example embodiments are not limited in this respect. It will be recognized that the elastic light manipulators described herein may be stretched along multiple axes. For instance, adaptable light manipulator 104 may be stretched along a second axis in addition to or in lieu of being stretched along axis 114. For example, the second axis may be perpendicular to axis 114.

FIG. 2 shows a block diagram of a display system 200, which is an example of system 100 shown in FIG. 1, according to an embodiment. As shown in FIG. 2, system 200 includes a display controller 202 and display device 112 (which includes image generator 102 and adaptable light manipulator 104). As shown in FIG. 2, image generator 102 includes a pixel array 208. Furthermore, as shown in FIG. 2, display controller 202 includes a pixel array controller 204 and a manipulator controller 206. These features of system 200 are described as follows.

Pixel array 208 includes a two-dimensional array of pixels (e.g., arranged in a grid). The pixels of pixel array 208 may each emit light included in light 108. Each pixel may be a separately addressable light source (e.g., a pixel of a plasma, LCD, or LED display) and/or may include a filter that filters light received from a separate or included light source. Each pixel of pixel array 208 may be individually controllable to vary color and intensity. In an embodiment, each pixel of pixel array 208 may include a plurality of sub-pixels that correspond to separate color channels, such as a trio of red, green, and blue sub-pixels that is included in each pixel.

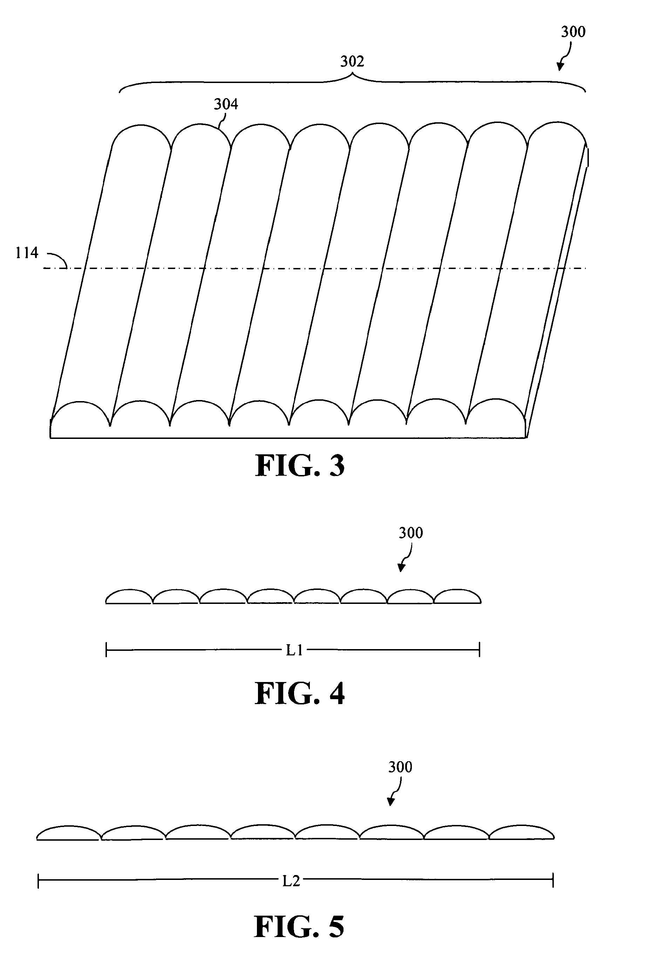

Adaptable light manipulator 104 is positioned proximate to a surface of pixel array 208. Adaptable light manipulator 104 may be configured to be stretchable along axis 114, though the scope of the example embodiments is not limited in this respect. For example, FIG. 3 shows an adaptable light manipulator 300 that is implemented as an elastic lenticular lens in accordance with an embodiment. Adaptable light manipulator 300 is an example of adaptable light manipulator 104 of FIGS. 1 and 2. As shown in FIG. 3, adaptable light manipulator 300 includes a sub-lens array 302. Sub-lens array 302 includes a plurality of elastic sub-lenses 304 arranged in a two-dimensional array (e.g., arranged side-by-side in a row). Each sub-lens 304 is shown in FIG. 3 as cylindrical in shape and having a substantially semicircular cross-section, but in other embodiments may have other shapes. In FIG. 3, sub-lens array 302 is shown to include eight sub-lenses for illustrative purposes and is not intended to be limiting. For instance, sub-lens array 302 may include any number (e.g., hundreds, thousands, etc.) of sub-lenses 304.

Adaptable light manipulator 300 is configured to be stretchable along axis 114. For instance, FIG. 4 depicts a cross-sectional view of adaptable light manipulator 300 in a non-stretched state, and FIG. 5 depicts a cross-sectional view of adaptable light manipulator 300 in a stretched state, according to example embodiments. When adaptable light manipulator 300 is in a non-stretched state, as shown in FIG. 4, adaptable light manipulator 300 has a first length L1. When adaptable light manipulator 300 is in a stretched state, as shown in FIG. 5, adaptable light manipulator 300 has a second length L2 that is greater than L1. By stretching adaptable light manipulator 300, optical properties of sub-lenses 304 are changed. For example, the second length L2 may be selectable to achieve desired optical properties of sub-lenses 304. In accordance with this example, the second length L2 may be selectable to accommodate a change in a number of users 212 and/or to accommodate movement of users 212, so that users 212 are able to perceive images that are intended for them. Accordingly, light 108 received at adaptable light manipulator 300 is manipulated to generate manipulated light 110.

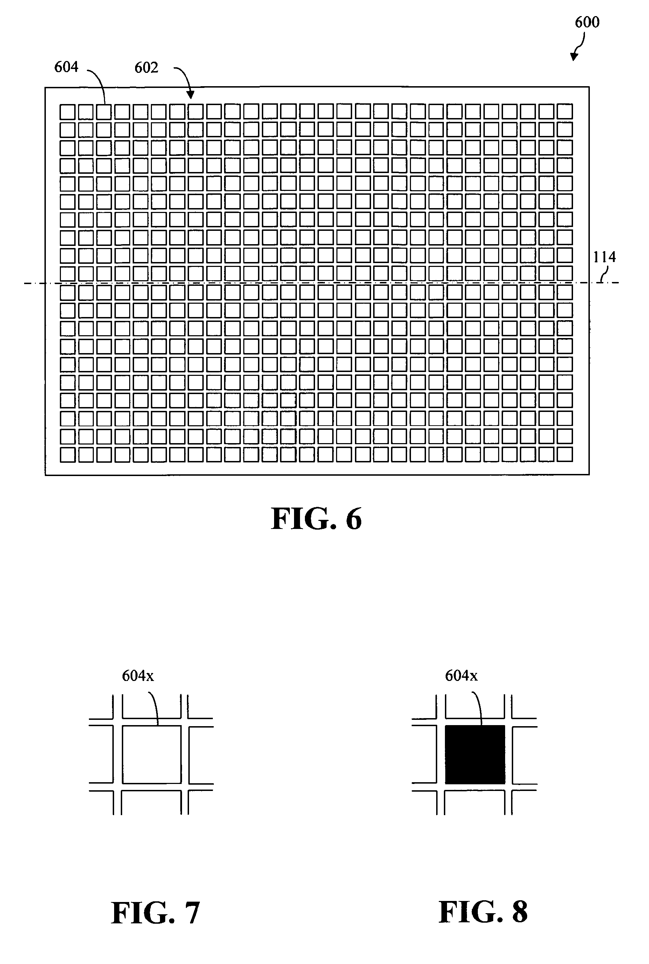

In another example, FIG. 6 shows an adaptable light manipulator 600 that is implemented as an adaptable parallax barrier in accordance with an embodiment. Adaptable light manipulator 600 is another example of adaptable light manipulator 104 of FIGS. 1 and 2. As shown in FIG. 6, adaptable light manipulator 600 includes a blocking region array 602. Blocking region array 602 includes a plurality of blocking regions 604 arranged in a two-dimensional array (e.g., arranged in a grid). Each blocking region 604 is shown in FIG. 6 as rectangular (e.g., square) in shape, but in other embodiments may have other shapes. Blocking region array 602 may include any number of blocking regions 604. For instance, in FIG. 6, blocking region array 602 includes twenty-eight blocking region 604 along an x-axis and includes twenty blocking regions 604 along a y-axis, for a total number of 560 blocking regions 604. However, these dimensions of blocking region array 602 and the total number of blocking regions 604 for blocking region array 602 shown in FIG. 6 are provided for illustrative purposes, and are not intended to be limiting. Blocking region array 602 may include any number of blocking regions 604, and may have any number of blocking regions 604 along the x- and y-axes, including hundreds or thousands of blocking regions 604 along each of the x- and y-axes.

Each blocking region 604 of blocking region array 602 is selectable to be opaque or transparent. For instance, FIG. 7 shows a blocking region 604x that is selected to be transparent, and FIG. 8 shows blocking region 604x when selected to be opaque, according to example embodiments. When blocking region 604x is selected to be transparent, light 108 from pixel array 208 may pass through blocking region 604x (e.g., to viewing space 106). When blocking region 604x is selected to be opaque, light 108 from pixel array 208 is blocked from passing through blocking region 604x. By selecting some of blocking regions 604 of blocking region array 602 to be transparent, and some of blocking regions 604 of blocking region array 602 to be opaque, light 108 received at blocking region array 602 is filtered to generate manipulated light 110.

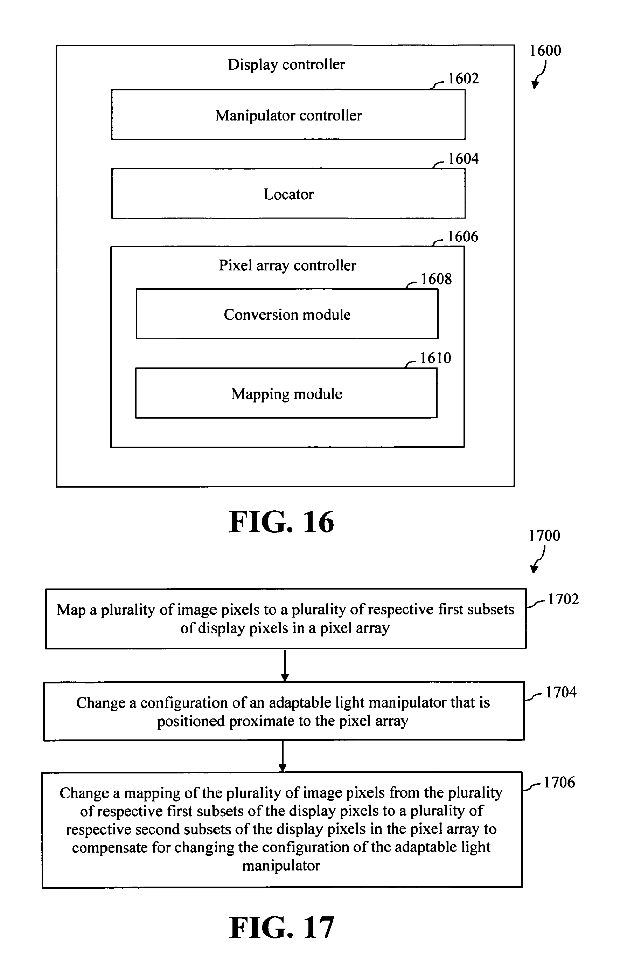

Display controller 202 is configured to generate control signals (and in some embodiments, to stretch adaptable light manipulator 104) to enable display device 112 to display two-dimensional and three-dimensional images to users 212 in viewing space 106. For example, pixel array controller 204 is configured to generate a control signal 214 that is received by pixel array 208. Control signal 214 may include one or more image pixels and a mapping indicator that maps the image pixels to respective subsets of pixels of pixel array 208. For instance, control signal 214 may cause the subsets of the pixels of pixel array 208 to emit light 108 of desired colors and/or intensities. Each subset may include one or more pixels of pixel array 208. Manipulator controller 206 is configured to generate a control signal 216 that is received by adaptable light manipulator 104 and/or to provide a tensile stress along axis 114 to stretch adaptable light manipulator 104. When a configuration of adaptable light manipulator 104 is modified based on control signal 216 and/or a tensile stress, pixel array controller 204 updates control signal 214 to include a revised mapping indicator that maps the image pixels to other respective subsets of pixels of pixel array 208. A more detailed discussion of some example techniques for controlling a pixel array to support an adaptable light manipulator is provided below in section II.E with reference to FIGS. 16-25.

In embodiments in which adaptable light manipulator 104 includes an elastic light manipulator (e.g., elastic lenticular lens 300), stretching elastic light manipulator104 causes the optical properties of adaptable light manipulator 104 to change, so that adaptable light manipulator 104 manipulates light 108 in accordance with the changed optical properties to generate manipulated light 110 that includes one or more two-dimensional and/or three-dimensional images that may be viewed by users 212 in viewing space 106.

For example, control signal 214 may control multiple sets of pixels of pixel array 208 to each emit light representative of a respective image, to provide a plurality of images. Manipulator controller 206 may stretch adaptable light manipulator 104 to manipulate the light received from pixel array 208 corresponding to the provided images such that one or more of the images are received at one or more of users 212 in two-dimensional form. Furthermore, manipulator controller 206 may stretch adaptable light manipulator 104 to manipulate the light received from pixel array 208 corresponding to at least one pair of the provided images such that the image pair is received at one or more of the users to be perceived as a three-dimensional image.

Manipulator controller 206 may be further configured to perform any of a variety of other operations with respect to adaptable light manipulator 104, though the example embodiments are not limited in this respect. For example, manipulator controller 206 may be configured to change a curvature of adaptable light manipulator 104 and/or an angle at which adaptable light manipulator 104 is mounted with respect to pixel array 208. Such changes may be performed to accommodate a moving user based on a location of the user's head, for instance.

In another example, manipulator controller 206 may be configured to retract adaptable light manipulator 104, such that adaptable light manipulator 104 (or a portion thereof) is removed from a position that is between pixel array 208 and users 212. For instance, retracting adaptable light manipulator 104 may provide an unfiltered view of some or all of the pixels in pixel array 208. Accordingly, retracting adaptable light manipulator 104 may enable one or more of the users to view a two-dimensional image that is generated by pixels of pixel array 208 that are not covered by adaptable light manipulator 104, even if adaptable light manipulator 104 is configured to provide a three-dimensional image with respect to other pixels of pixel array 208.

In embodiments in which adaptable light manipulator 104 includes an adaptable parallax barrier (e.g., adaptable light manipulator 600), control signal 216 may include one or more control signals used to cause blocking regions 604 of blocking region array 602 to be transparent or opaque to filter light 108 to facilitate the generation of manipulated light 110 that includes one or more two-dimensional and/or three-dimensional images that may be viewed by users 212 in viewing space 106.

In accordance with these embodiments, control signal 216 may control blocking regions 604 of blocking region array 602 to filter the light received from pixel array 208 corresponding to the provided images such that one or more of the images are received at one or more of users 212 in two-dimensional form. For instance, control signal 216 may select one or more sections of blocking regions 604 of blocking region array 602 to be transparent, to transmit one or more corresponding two-dimensional images to users 212. Furthermore, control signal 216 may control blocking regions 604 of blocking region array 602 to filter the light received from pixel array 208 corresponding to at least one pair of the provided images such that the image pair is received at one or more of the users to be perceived as a three-dimensional image. For example, control signal 216 may select parallel strips of blocking regions 604 of blocking region array 602 to be transparent to form a three-dimensional image to be perceived by one or more of users 212.

In further accordance with these embodiments, manipulator controller 206 may generate control signal 216 to form any number of parallel strips of blocking regions 604 of blocking region array 602 to be transparent, to modify the number and/or spacing of parallel strips of blocking regions 604 of blocking region array 602 that are transparent, to select and/or modify a width and/or a length (in blocking regions 604) of one or more strips of blocking regions 604 of blocking region array 602 that are transparent, to select and/or modify an orientation of one or more strips of blocking regions 604 of blocking region array 602 that are transparent, to select one or more areas of blocking region array 602 to include all transparent or all opaque blocking regions 604, etc.

### B. Additional Information Regarding Example Elastic Light Manipulator Embodiments

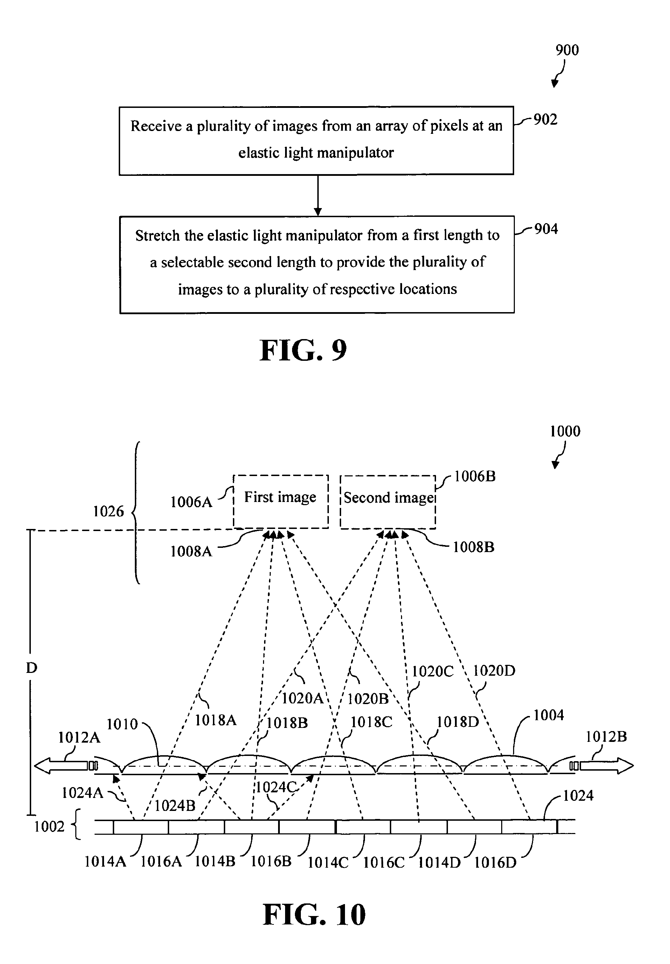

Two-dimensional and three-dimensional images may be generated by system 200 in various ways, in embodiments. For instance, FIG. 9 depicts a flowchart 900 of a method for generating two-dimensional and/or three-dimensional images in accordance with an example embodiment. Flowchart 900 may be performed by system 200 in FIG. 2, for example. Flowchart 900 is described with respect to FIG. 10, which shows a cross-sectional view of a display system 1000. Display system 1000 is an example embodiment of system 200 shown in FIG. 2. As shown in FIG. 10, system 1000 includes a pixel array 1002 and an elastic light manipulator 1004. Further structural and operational embodiments will be apparent to persons skilled in the relevant art(s) based on the discussion regarding flowchart 900. Flowchart 900 is described as follows.

Flowchart 900 begins with step 902. In step 902, a plurality of images is received from an array of pixels at an elastic light manipulator. For example, as shown in FIG. 10, pixel array 1002 includes a plurality of pixels 1014A-1014D and 1016A-1016D. Pixels 1014 alternate with pixels 1016, such that pixels 1014A-1014d and 1016A-1016D are arranged in series in the order of pixels 1014A, 1016A, 1014B, 1016B, 1014C, 1016C, 1014D, and 1016D. Further pixels may be included in pixel array 1002 that are not visible in FIG. 10. Each of pixels 1014A-1014D and 1016A-1016D generates light, which emanates from display surface 1024 of pixel array 1002 generally in all directions of a hemispherical pattern (e.g., generally upward in FIG. 10) towards elastic light manipulator 1004. Some example indications of light emanating from pixels 1014A-1014D and 1016A-1016D are shown in FIG. 10 (as dotted lines), including light 1024A and light 1018A emanating from pixel 1014A, light 1024B, light 1018B, and light 1024C emanating from pixel 1014B, etc. Elastic light manipulator 1004 is shown to be implemented as an elastic lenticular lens for illustrative purposes and is not intended to be limiting. Elastic light manipulator 1004 may be any suitable type of elastic light manipulator.

In step 904, the elastic light manipulator is stretched from a first length to a selectable second length to provide the plurality of images to a plurality of respective locations. For example, as shown in FIG. 10, a tensile stress (indicated by arrows 1012A and 1012B) may be applied to elastic light manipulator 1004 along axis 1010 to stretch elastic light manipulator 1004 from the first length (e.g., L1 in FIG. 4) to the second length (e.g., L2 in FIG. 5). As shown in FIG. 10, light emanating from pixel array 1002 is manipulated by elastic light manipulator 1004 to form a plurality of images in a viewing space 1026, including a first image 1006A at a first location 1008A and a second image 1006B at a second location 1008B. As described above, pixel array 1002 includes a first set of pixels 1014A-1014D and a second set of pixels 1016A-1016D. Pixels 1014A-1014D correspond to first image 1006A and pixels 1016A-1016D correspond to second image 1006B. Due to the spacing of pixels 1014A-1014D and 1016A-1016D in pixel array 1002, and the geometry of elastic light manipulator 1004, first and second images 1006A and 1006B are formed at locations 1008A and 1008B, respectively, which are positioned at a distance D from pixel array 1002. As shown in FIG. 10, light 1018A-1018D from the first set of pixels 1014A-1014D forms first image 1006A at first location 1008A, and light 1020A-1020D from the second set of pixels 1016A-1016D forms second image 1006B at second location 1008B, based on the optical properties of elastic light manipulator 1004.

For example, elastic light manipulator 1004 may refract a first portion of the light emanating from pixel array 1002 that corresponds to first image 1006A such that first image 1006A is perceived at first location 1008A but not at second location 1008B. For instance, the first portion of the light is shown in FIG. 10 to include light 1018A-1018D and light 1024A-1024C. Elastic light manipulator 1004 may refract light 1018A-1018D toward location 1008A and may refract light 1024A-1024C toward locations other than first location 1008A and second location 1008B. Elastic light manipulator 1004 may refract a second portion of the light emanating from pixel array 1002 that corresponds to second image 1006B such that second image 1006B is perceived at second location 1008B but not at first location 1008A. Although not shown in FIG. 10, instances of first and second images 1006A and 1006B may repeat in viewing space 1026.

### C. Additional Information Regarding Example Adaptable Parallax Barrier Embodiments

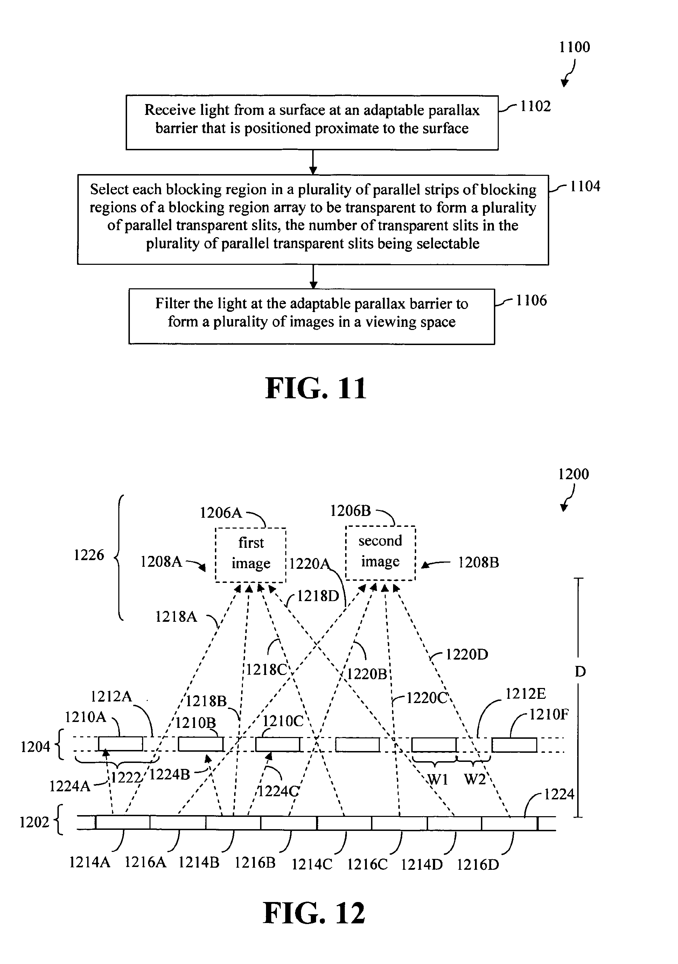

FIG. 11 depicts a flowchart 1100 of another method for generating two-dimensional and/or three-dimensional images in accordance with an example embodiment. Flowchart 1100 may be performed by system 200 in FIG. 2, for example. Flowchart 1100 is described with respect to FIG. 12, which shows a cross-sectional view of a display system 1200. Display system 1200 is another example embodiment of system 200 shown in FIG. 2. As shown in FIG. 12, system 1200 includes a pixel array 1202 and a blocking region array 1204. Further structural and operational embodiments will be apparent to persons skilled in the relevant art(s) based on the discussion regarding flowchart 1100. Flowchart 1100 is described as follows.

Flowchart 1100 begins with step 1102. In step 1102, light is received from a surface at an adaptable parallax barrier that is positioned proximate to the surface. For example, as shown in FIG. 12, pixel array 1202 includes a plurality of pixels 1214a-1214d and 1216a-1216d. Pixels 1214 alternate with pixels 1216, such that pixels 1214a-1214d and 1216a-1216d are arranged in series in the order of pixels 1214a, 1216a, 1214b, 1216b, 1214c, 1216c, 1214d, and 1216d. Further pixels may be included in pixel array 1202 that are not visible in FIG. 12. Each of pixels 1214a-1214d and 1216a-1216d generates light, which emanates from display surface 1224 of pixel array 1202 generally in all directions of a hemispherical pattern (e.g., generally upward in FIG. 12) towards blocking region array 1204. Some example indications of light emanating from pixels 1214a-1214d and 1216a-1216d are shown in FIG. 12 (as dotted lines), including light 1224a and light 1218a emanating from pixel 1214a, light 1224b, light 1218b, and light 1224c emanating from pixel 1214b, etc.

In step 1104, each blocking region in a plurality of parallel strips of blocking regions of the blocking region array is selected to be transparent to form a plurality of parallel transparent slits, the number of transparent slits in the plurality of parallel transparent slits being selectable. For example, as shown in FIG. 12, blocking region array 1204 includes a plurality of blocking regions that are each either transparent or opaque. For example, blocking regions that are opaque are indicated as blocking regions 1210a-1210f, and blocking regions that are transparent are indicated as blocking regions 1212a-1212e. Further blocking regions may be included in blocking region array 1204 that are not visible in FIG. 12. Each of blocking regions 1210a-1210f and 1212a-1212e may include one or more blocking regions. Blocking regions 1210 alternate with blocking regions 1212, such that blocking regions 1210a-1210f and 1212a-1212e are arranged in series in the order of blocking regions 1210a, 1212a, 1210b, 1212b, 1210c, 1212c, 1210d, 1212d, 1210e, 1212e, and 1210f. In this manner, opaque blocking regions 1210 are alternated with transparent blocking regions 1212 to form a plurality of parallel transparent slits in blocking region array 1204.

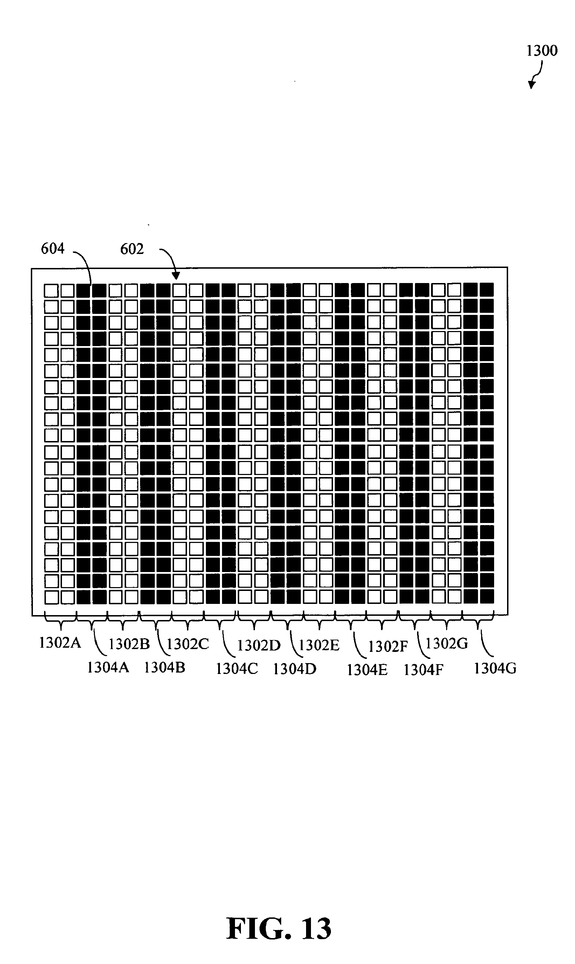

For instance, FIG. 13 depicts a view of adaptable light manipulator 600 of FIG. 6, which is implemented as an adaptable parallax barrier, according to an example embodiment. As shown in FIG. 13, adaptable light manipulator 600 includes blocking region array 602, which includes a plurality of blocking regions 604 arranged in a two-dimensional array. Furthermore, as shown in FIG. 13, blocking region array 602 includes a plurality of parallel strips of blocking regions 604 that are selected to be transparent to form a plurality of parallel transparent strips 1302A-1302G. As shown in FIG. 13, parallel transparent strips 1302A-1302G (transparent slits) are alternated with parallel opaque strips 1304A-1304G of blocking regions 304 that are selected to be opaque to provide a slit pattern. A slit pattern is an arrangement of blocking regions in an adaptable light manipulator in which transparent strips of blocking regions are alternated with opaque strips of blocking regions. In the example of FIG. 13, transparent strips 1302A-1302G and opaque strips 1304A-1304G each have a width (along the x-dimension) of two blocking regions 304, and have lengths that extend along the entire y-dimension (twenty blocking regions 304) of blocking region array 304, although in other embodiments, may have alternative dimensions.

In step 1106, the light is filtered at the parallax barrier to form a plurality of images in a viewing space. For example, as shown in FIG. 12, light emanating from pixel array 1202 is filtered by blocking region array 1204 to form a plurality of images in a viewing space 1226, including a first image 1206A at a first location 1208A and a second image 1206B at a second location 1208B. A portion of the light emanating from pixel array 1202 is blocked by opaque blocking regions 1210, while another portion of the light emanating from pixel array 1202 passes through transparent blocking regions 1212, to be filtered by blocking region array 1204. For instance, light 1224A from pixel 1214A is blocked by opaque blocking region 1210A, and light 1224B and light 1224C from pixel 1214B are blocked by opaque blocking regions 1210B and 1210C, respectively. In contrast, light 1218A from pixel 1214A is passed by transparent blocking region 1212A and light 1218B from pixel 1214B is passed by transparent blocking region 1212B.

By forming parallel transparent slits in a blocking region array, light from a pixel array can be filtered to form multiple images in a viewing space. For instance, system 1200 shown in FIG. 12 is configured to form first and second images 1206A and 1206B at locations 1208A and 1208B, respectively. Although not shown in FIG. 12, instances of first and second images 1206A and 1206B may repeat in viewing space 1226. As described above, pixel array 1202 includes a first set of pixels 1214A-1214D and a second set of pixels 1216A-1216D. Pixels 1214A-1214D correspond to first image 1206A and pixels 1216A-1216D correspond to second image 1206B. Due to the spacing of pixels 1214A-1214D and 1216A-1216D in pixel array 1202, and the geometry of transparent blocking regions 1212 in blocking region array 1204, first and second images 1206A and 1206A are formed at locations 1208A and 1208B, respectively, which are positioned at a distance D from pixel array 1202.

For example, in embodiments in which the adaptable light manipulator is implemented as an elastic parallax barrier, the geometry of transparent blocking regions 1212 may be based on an extent to which blocking region array 1204 is stretched. In accordance with this example, a greater extent of stretching may result in opaque blocking regions 1210 having a greater length W1 and/or transparent blocking regions 1212 having a greater length W2. Accordingly, the greater extent of stretching may result in a greater slit spacing 1222 (center-to-center). Slit spacing 1222 is described in greater detail in the following discussion. A lesser extent of stretching may result in opaque blocking regions 1210 having a lesser length W1 and/or transparent blocking regions 1212 having a lesser length W2. Accordingly, the lesser extent of stretching may result in a narrower slit spacing 1222.

As shown in FIG. 12, light 1218A-1218D from the first set of pixels 1214A-1214D forms first image 1206A at first location 1208A and light 1220A-1220D from the second set of pixels 1216A-1216D forms first image 1206A at second location 1208B due to the filtering of the transparent slits (corresponding to transparent blocking regions 1212A-1212E) in blocking region array 1204.

FIG. 12 shows a slit spacing 1222 (center-to-center) of transparent blocking regions 1212 in blocking region array 1204. Spacing 1222 may be determined to select locations for parallel transparent slits to be formed in blocking region array 1204 for a particular image distance 1228 at which images are desired to be formed (for viewing by users). If a spacing of pixels 1214A-1214D and distance 1228 are known, the spacing 1222 between adjacent parallel transparent slits in blocking region array 1204 may be selected. For instance, manipulator controller 206 (of FIG. 2) may be configured to calculate spacing 1222 for particular spacing of pixels 1214A-1214D and a desired distance D for images 1206 to be formed.

### D. Example Multi-Three-Dimensional Image Embodiments

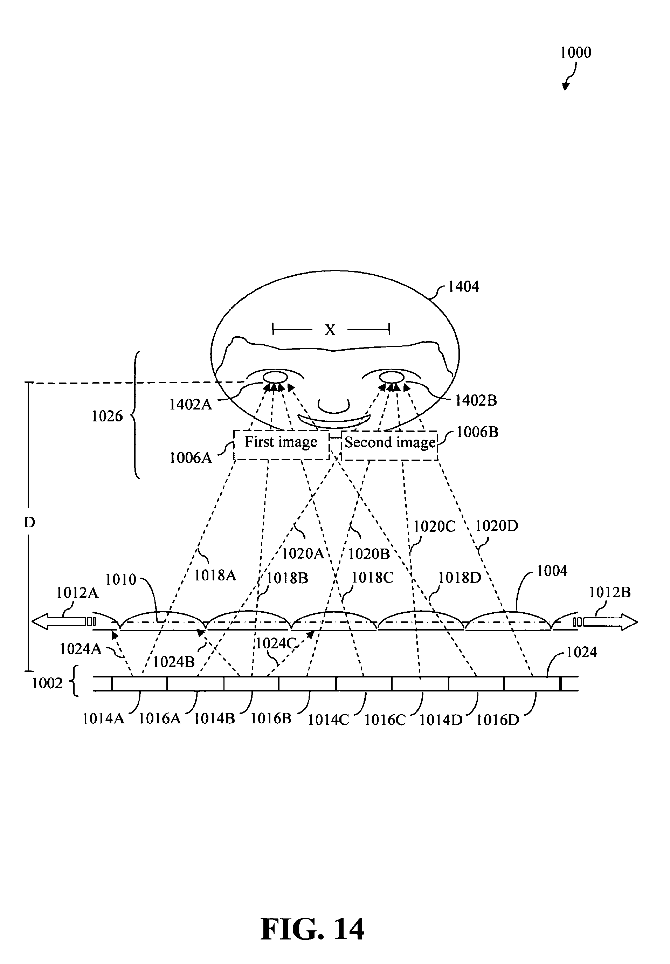

In an embodiment, a display system (e.g., display system 1000 of FIG. 10 or display system 1200 of FIG. 12) may be configured to generate three-dimensional images for viewing by users in a viewing space. The following discussion is provided with reference to display system 1000 as shown in FIG. 14 for illustrative purposes and is not intended to be limiting. Persons skilled in the relevant art(s) will recognize that the techniques described herein for providing three-dimensional and multi-three-dimensional images are applicable to any suitable display system.

Referring to FIG. 14, first and second images 1006A and 1006B may be configured to be perceived by a user as a three-dimensional image. For example, light from the array of pixels may be manipulated to form a first image corresponding to the first set of pixels at a right eye location and to form a second image corresponding to the second set of pixels at a left eye location. As shown in FIG. 14, a user 1402 receives first image 1006A at a first eye location 1402A and second image 1006B at a second eye location 1402B according to an example embodiment. First and second images 1006A and 1006B may be generated by first set of pixels 1014A-1014D and second set of pixels 1016A-1016D, respectively, as images that are slightly different from each other. Images 1006A and 1006B are combined in the visual center of the brain of user 1404 to be perceived as a three-dimensional image.

In such an embodiment, first and second images 1006A and 1006B may be formed by display system 1000 such that their centers are spaced apart a width of a user's pupils (e.g., an "interocular distance", labeled as "X" in FIG. 14). For example, the spacing of first and second images 1006A and 1006B may be approximately 65 mm (or other suitable spacing) to generally be equivalent to interocular distance X.

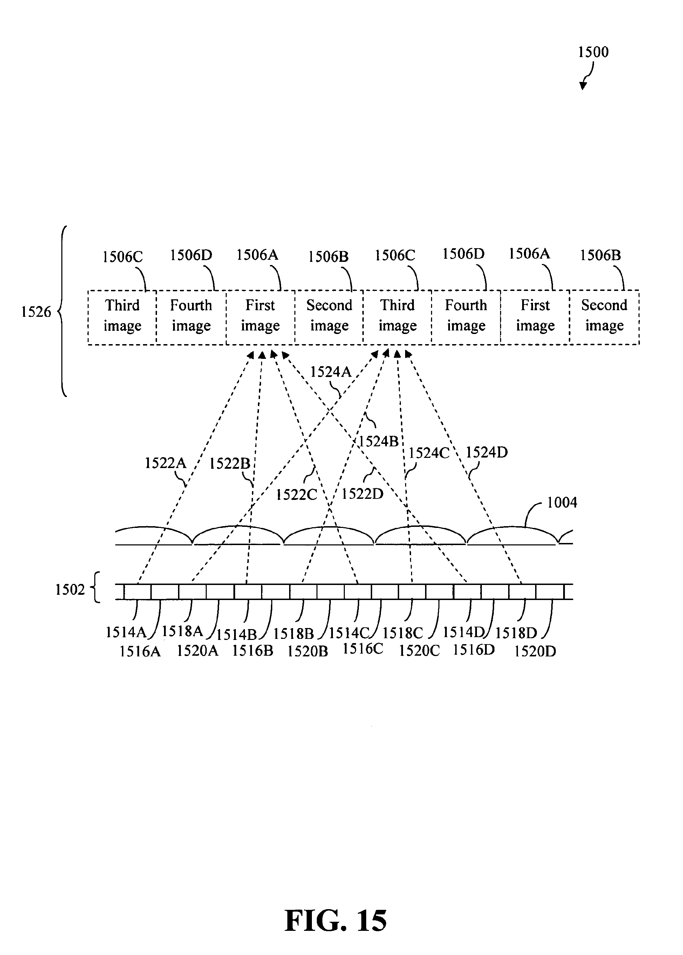

In a further embodiment, display system 1000 may be configured to generate multiple three-dimensional images for viewing by users in a viewing space. Each of the three-dimensional images may correspond to a pair of images generated by sets of pixels of pixel array 1024. Adaptable light manipulator 1004 manipulates light from pixel array 1024 to form the image pairs in a viewing space to be perceived by users as three-dimensional images. Adaptable light manipulator 1004 is shown to be implemented as an elastic lenticular lens for illustrative purposes and is not intended to be limiting. For instance, FIG. 15 depicts a cross-sectional view of a display system 1500 that provides multiple three-dimensional images according to an example embodiment. As shown in FIG. 15, system 1500 includes a pixel array 1502 and an adaptable light manipulator 1004. System 1500 may also include display controller 202 of FIG 2, which is not shown in FIG. 15 for ease of illustration. System 1500 is described as follows.

In the example of FIG. 15, pixel array 1502 includes a first set of pixels 1514A-1514D, a second set of pixels 1516A-1516D, a third set of pixels 1518A-1518D, and a fourth set of pixels 1520A-1520D. Each set of pixels generates a corresponding image. First set of pixels 1514A-1514D and third set of pixels 1518A-1518D are configured to generate images that combine to form a first three-dimensional image. Second set of pixels 1516A-1516D and fourth set of pixels 1520A-1520D are configured to generate images that combine to form a second three-dimensional image. Pixels of the four sets of pixels are alternated in pixel array 1502 in the order of pixel 1514A, pixel 1516A, pixel 1518A, pixel 1520A, pixel 1514B, pixel 1516B, etc. Further pixels may be included in each set of pixels in pixel array 1502 that are not visible in FIG. 15, including hundreds, thousands, or millions of pixels in each set of pixels. Each of pixels 1514A-1514D, pixels 1516A-1516D, pixels 1518A-1518D, and pixels 1520A-1520D generates light, which emanates from the surface of pixel array 1502 toward adaptable light manipulator 1004.

As shown in FIG. 15, light emanating from pixel array 1502 is manipulated by adaptable light manipulator 1004 to form a plurality of images in a viewing space 1526. For instance, four images are formed in viewing space 1526, including first-fourth images 1506A-1506D. Pixels 1514A-1514D correspond to first image 1506A, pixels 1516A-1516D correspond to second image 1506B, pixels 1518A-1518D correspond to third image 1506C, and pixels 1520A-1520D correspond to fourth image 1506D. As shown in FIG. 15, light 1522A-1522D from the first set of pixels 1514A-1514D forms first image 1506A, and light 1524A-1524D from the third set of pixels 1518A-1518D forms third image 1506C, due to the optical characteristics of adaptable light manipulator 1004 that are associated with adaptable light manipulator 1004 being stretched to a specified length. Although not shown in FIG. 15 (for ease of illustration), in a similar fashion, light from the second set of pixels 1516A-1516D forms second image 1506B, and light from the fourth set of pixels 1520A-1520D forms fourth image 1506D. Adaptable light manipulator 1004 is described as being stretched for illustrative purposes and is not intended to be limiting. It will be recognized that a configuration of adaptable light manipulator 1004 may be modified in any suitable manner.

It is noted that multiple instances of each of first-fourth images 1506A-1508D may be formed in viewing space 1526 in a repeating fashion due to the optical characteristics of adaptable light manipulator 1004. As shown in FIG. 15, a first instance of third image 1506C is next to a first instance of fourth image 1506D, which is next to a first instance of first image 1506A, followed by a first instance of second image 1506D, followed by a second instance of third image 1506C, followed by a second instance of fourth image 1506D, followed by a second instance of first image 1506A, followed by a second instance of second image 1506B. Each instance of first-fourth images 1506A-1508D is generated by light emanating from first-fourth sets of pixels 1514A-1514D, 1516A-1516D, 1518A-1518D, and 1520A-1520D, respectively. Further instances of first-fourth images 1506A-1506D may repeat in viewing space 1526 in a similar fashion, but are not shown in FIG. 15 for ease of illustration.

In the embodiment of FIG. 15, any pair of images 1506A-1506D may be configured to be perceived as a three-dimensional image by a user in viewing space 1526 (similarly to user 1404 in FIG. 14). For instance, first and third images 1506A and 1506C may be configured to be perceived by a user as a first three-dimensional image, such that first image 1506A is received at a first eye location and third image 1506C is received at a second eye location of a first user. Furthermore, second and fourth images 1506B and 1506D may be configured to be perceived by a second user as a second three-dimensional image, such that second image 1506B is received at a first eye location and fourth image 1506D is received at a second eye location of the second user. Furthermore, the additional instances of the pair of first and third images 1506A and 1506C, and of the pair of second and fourth images 1506B and 1506D may be perceived as the first and second three-dimensional images by further users in viewing space 1526.

In the example of FIG. 15, two three-dimensional images are provided by system 1500. In further embodiments, further numbers of three-dimensional images may be provided, including three three-dimensional images, four three-dimensional images, etc. In such case, each three-dimensional image is generated by manipulating light (using an adaptable light manipulator) corresponding to an image pair generated by a corresponding pair of sets of pixels of the pixel array, in a similar fashion as described with respect to FIG. 15 for two three-dimensional images.

### E. Example Pixel Array Controlling Embodiments

As mentioned above, mapping of image pixels to display pixels may be changed to accommodate modification of a configuration of an adaptable light manipulator. For instance, changing the mapping of the image pixels with respect to the display pixels may enable a viewer to perceive an accurate rendering of an image that is defined by the image pixels. The mapping of the image pixels may be changed in any of a variety of ways, including but not limited to changing a number of display pixels that represents each image pixel, changing the display pixels or groups thereof that correspond to the respective image pixels, etc.

FIG. 16 is a block diagram of an example implementation of a display controller shown in FIG. 2 according to an embodiment. Display controller includes a manipulator controller 1602, a locator 1604, and a pixel array controller 1606. Manipulator controller 1602 is configured to modify a configuration of an adaptable light manipulator. For instance, the adaptable light manipulator may be positioned proximate to a pixel array, so that the adaptable light manipulator may manipulate light that is received from the pixel array. Some example techniques for modifying a configuration of an adaptable light manipulator are described above with reference to FIGS. 3-15. For example, if the adaptable light manipulator is implemented as an elastic light manipulator (e.g., an elastic lenticular lens, an elastic parallax barrier, etc.), manipulator controller 1604 may be configured to stretch the adaptable light manipulator to change optical properties thereof. If the adaptable light manipulator is implemented as an adaptable parallax barrier that includes a plurality of blocking regions, manipulator controller 1604 may be configured to change one or more of the blocking regions from an opaque state to a transparent state and/or one or more of the blocking regions from a transparent state to an opaque state.

Locator 1604 is configured to determine whether a position of a viewer is changed with respect to the pixel array. For example, locator 1604 may be configured to provide a position indicator to manipulator controller 1602 upon determining that the position of the viewer is changed with respect to the pixel array. In accordance with this example, manipulator controller 1604 may be configured to modify the configuration of the adaptable light manipulator in response to receiving the position indicator from locator 1604.

Pixel array controller 1606 is configured to control the pixel array to support the adaptable light manipulator. Pixel array controller 1606 includes a conversion module 1608 and a mapping module 1610. Conversion module 1608 is configured to convert image pixels among various formats. For instance, conversion module 1608 may be configured to convert image pixels that correspond to a two-dimensional representation of an image to image pixels that correspond to a three-dimensional representation of the image, or vice versa.

Mapping module 1610 is configured to map image pixels among the display pixels of the pixel array. For example, mapping module 1610 may be configured to initially map the image pixels to respective first subsets of the display pixels. In accordance with this example, mapping module 1610 may be further configured to map the image pixels to respective second subsets of the display pixels in response to determining that manipulator controller 1602 has modified the configuration of the adaptable light manipulator.

It will be recognized that display controller 1600 may not include one or more of manipulator controller 1602, locator 1604, pixel array controller 1606, conversion module 1608, and/or mapping module 1610. Furthermore, display controller 1600 may include modules in addition to or in lieu of manipulator controller 1602, locator 1604, pixel array controller 1606, conversion module 1608, and/or mapping module 1610.

FIGS. 17-20 depict flowcharts 1700, 1800, 1900, and 2000 of methods for controlling a pixel array to support an adaptable light manipulator in accordance with example embodiments. The methods of flowcharts 1700, 1800, 1900, and 2000 may be performed, for example, by display controller 1600 of FIG. 1600. However, the methods are not limited to that embodiment and may be implemented by other display controllers.

As shown in FIG. 17, the method of flowchart 1700 begins at step 1702. In step 1702, a plurality of image pixels is mapped to a plurality of respective first subsets of display pixels in a pixel array. In an example implementation, mapping module 1610 maps the plurality of image pixels to the plurality of respective first subsets of the display pixels.

At step 1704, a configuration of an adaptable light manipulator that is positioned proximate to the pixel array is changed. For example, in implementations in which the adaptable light manipulator includes an adaptable parallax barrier, a slit pattern, an orientation, etc. of the adaptable parallax barrier may be changed. In implementations in which the adaptable light manipulator includes an elastic light manipulator, an extent to which the elastic light manipulator is stretched may be changed; an orientation of the elastic light manipulator may be changed, etc. The orientation of an adaptable light manipulator may be changed by moving the adaptable light manipulator in any direction with respect to the pixel array, rotating the adaptable light manipulator, changing an angle between the adaptable light manipulator and the pixel array, etc. In an example implementation, manipulator controller 1602 changes the configuration of the adaptable light manipulator.

At step 1706, a mapping of the plurality of image pixels is changed from the plurality of respective first subsets of the display pixels to a plurality of respective second subsets of the display pixels in the pixel array to compensate for changing the configuration of the adaptable light manipulator. For example, the mapping of the plurality of image pixels may be changed in response to changing the configuration of the adaptable light manipulator. In another example, the mapping of the plurality of image pixels may be changed on-the-fly. In yet another example, each of the first subsets and each of the second subsets may include the same number of display pixels. In still another example, each of the first subsets may include a first number of display pixels, and each of the second subsets may include a second number of pixels that is different from the first number. In an example implementation, mapping module 1610 changes the mapping of the plurality of image pixels from the plurality of respective first subsets of the display pixels to the plurality of respective second subsets of the display pixels.

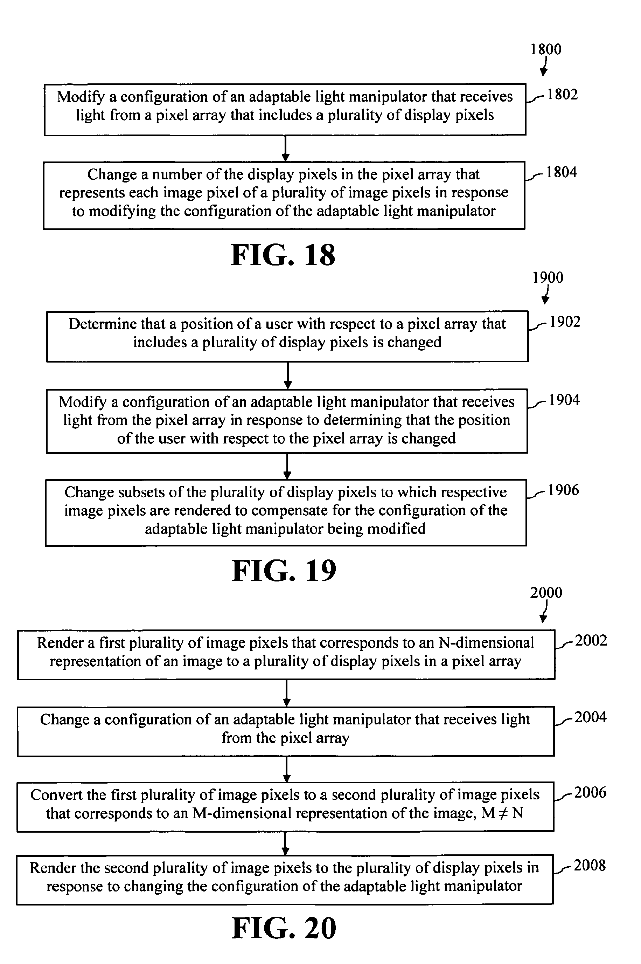

As shown in FIG. 18, the method of flowchart 1800 begins at step 1802. In step 1802, a configuration of an adaptable light manipulator is modified. The adaptable light manipulator receives light from a pixel array that includes a plurality of display pixels. In an example implementation, manipulator controller 1602 modifies the configuration of the adaptable light manipulator.

At step 1804, a number of the display pixels in the pixel array that represents each image pixel of a plurality of image pixels is changed in response to modifying the configuration of the adaptable light manipulator. For instance, the number of the display pixels in the pixel array that represents each image pixel may be changed on-the-fly. In an example implementation, mapping module 1610 changes the number of the display pixels in the pixel array that represents each image pixel of the plurality of image pixels.

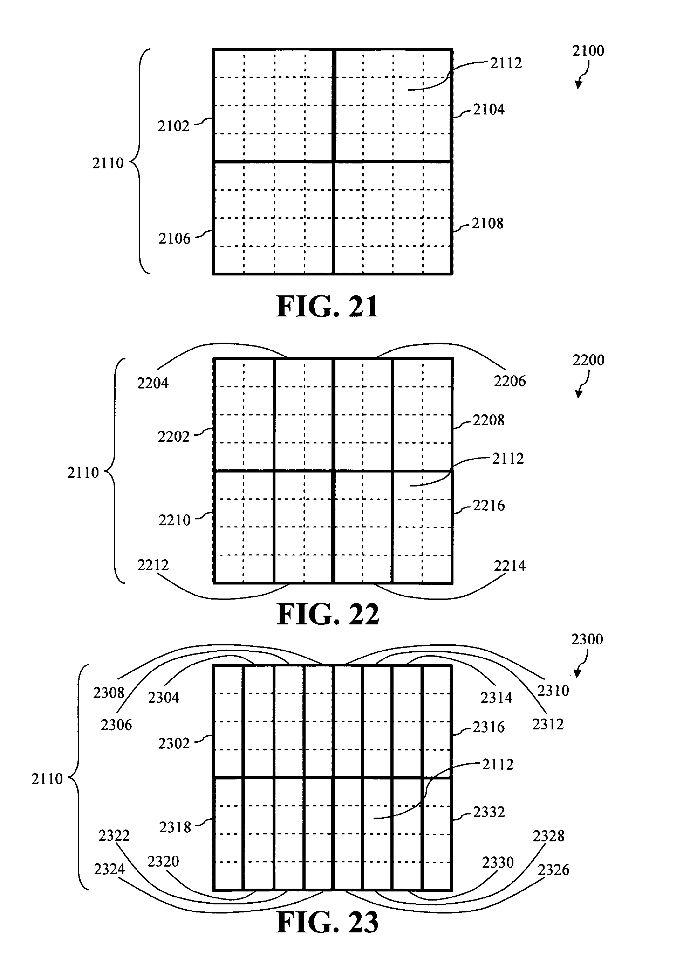

FIGS. 21-23 illustrate mappings 2100, 2200, and 2300 of image pixels to display pixels in accordance with example embodiments. As shown in FIG. 21, a pixel array 2110 includes sixty-four display pixels 2112 arranged in eight rows and eight columns for illustrative purposes. Pixel array 2110 includes a first subset 2102 of the pixels 2112, a second subset 2104 of the pixels 2112, a third subset 2106 of the pixels 2112, and a fourth subset 2108 of the pixels 2112. Each subset 2102, 2104, 2106, and 2108 of the pixels 2112 includes sixteen pixels arranged in four rows and four columns. A first image pixel is mapped to the first subset 2102; a second image pixel is mapped to the second subset 2104; a third pixel is mapped to the third subset 2106; and a fourth image pixel is mapped to the fourth subset 2108. Accordingly, the first image pixel is rendered to the first subset 2102; the second image pixel is rendered to the second subset 2104; the third image pixel is rendered to the third subset 2106; and the fourth image pixel is rendered to the fourth subset 2108.

In an example embodiment, subsets 2102, 2104, 2106, and 2108 correspond to a two-dimensional representation of an image. In accordance with this example embodiment, subsets 2102, 2104, 2106, and 2108 are configured to be perceived by a viewer as respective portions of a two-dimensional image. Accordingly, mapping 2100 may correspond to a two-dimensional mode of operation of pixel array 2110.

As shown in FIG. 22, pixel array 2110 includes first, second, third, fourth, fifth, sixth, seventh, and eighth subsets 2202, 2204, 2206, 2208, 2210, 2212, 2214, and 2216 of the pixels 2112 in pixel array 2110. Each subset 2202, 2204, 2206, 2208, 2210, 2212, 2214, and 2216 of the pixels 2112 includes eight pixels arranged in four rows and two columns. A first image pixel is mapped to the first subset 2202; a second image pixel is mapped to the second subset 2204; and so on. Accordingly, the first image pixel is rendered to the first subset 2202; the second image pixel is rendered to the second subset 2204; and so on.

In an example embodiment, subsets 2202, 2204, 2206, 2208, 2210, 2212, 2214, and 2216 correspond to a three-dimensional representation of an image. In accordance with this example embodiment, subsets 2202 and 2204 combine to be perceived by a viewer as a first portion of a three-dimensional image; subsets 2206 and 2208 combine to be perceived by the viewer as a second portion of the three-dimensional image; subsets 2210 and 2212 combine to be perceived by the viewer as a third portion of the three-dimensional image; and subsets 2214 and 2216 combine to be perceived by the viewer as a fourth portion of the three-dimensional image. Accordingly, mapping 2200 may correspond to a first three-dimensional mode of operation of pixel array 2110 in which pixel array 2110 provides a single three-dimensional image.

As shown in FIG. 23, pixel array 2110 includes first through sixteenth subsets 2302, 2304, 2306, 2308, 2310, 2312, 2314, 2316, 2318, 2320, 2322, 2324, 2326, 2328, 2330, and 2332 of the pixels 2112 in pixel array 2110. Each subset 2302, 2304, 2306, 2308, 2310, 2312, 2314, 2316, 2318, 2320, 2322, 2324, 2326, 2328, 2330, and 2332 of the pixels 2112 includes four pixels arranged in four rows and one column. A first image pixel is mapped to the first subset 2302; a second image pixel is mapped to the second subset 2304; and so on. Accordingly, the first image pixel is rendered to the first subset 2302; the second image pixel is rendered to the second subset 2304; and so on.

In an example embodiment, subsets 2302, 2306, 2310, 2314, 2318, 2322, 2326, and 2330 correspond to a three-dimensional representation of a first image, and subsets 2304, 2308, 2312, 2316, 2320, 2324, 2328, and 2332 correspond to a three-dimensional representation of a second image. In accordance with this example embodiment, subsets 2302 and 2306 combine to be perceived by a viewer as a first portion of a first three-dimensional image; subsets 2310 and 2314 combine to be perceived by the viewer as a second portion of the first three-dimensional image; subsets 2318 and 2322 combine to be perceived by the viewer as a third portion of the first three-dimensional image; and subsets 2326 and 2330 combine to be perceived by the viewer as a fourth portion of the first three-dimensional image. In further accordance with this example embodiment, subsets 2304 and 2308 combine to be perceived by a second viewer as a first portion of a second three-dimensional image; subsets 2312 and 2316 combine to be perceived by the second viewer as a second portion of the second three-dimensional image; subsets 2320 and 2324 combine to be perceived by the second viewer as a third portion of the second three-dimensional image; and subsets 2328 and 2332 combine to be perceived by the second viewer as a fourth portion of the second three-dimensional image.

In another example embodiment, subsets 2302, 2304, 2310, 2312, 2318, 2320, 2326, and 2328 correspond to a three-dimensional representation of a first image, and subsets 2306, 2308, 2314, 2316, 2322, 2324, 2330, and 2332 correspond to a three-dimensional representation of a second image. In accordance with this example embodiment, subsets 2302 and 2304 combine to be perceived by a viewer as a first portion of a first three-dimensional image; subsets 2310 and 2312 combine to be perceived by the viewer as a second portion of the first three-dimensional image; subsets 2318 and 2320 combine to be perceived by the viewer as a third portion of the first three-dimensional image; and subsets 2326 and 2328 combine to be perceived by the viewer as a fourth portion of the first three-dimensional image. In further accordance with this example embodiment, subsets 2306 and 2308 combine to be perceived by a second viewer as a first portion of a second three-dimensional image; subsets 2314 and 2316 combine to be perceived by the second viewer as a second portion of the second three-dimensional image; subsets 2322 and 2324 combine to be perceived by the second viewer as a third portion of the second three-dimensional image; and subsets 2330 and 2332 combine to be perceived by the second viewer as a fourth portion of the second three-dimensional image.

Accordingly, mapping 2300 may correspond to a second three-dimensional mode of operation of pixel array 2110 in which pixel array 2110 provides two three-dimensional images. For instance, each of the two three-dimensional images may use a respective half of the display pixels 2112 in pixel array 2110, as described above.

Pixel array 2110 is shown in FIGS. 21-23 to include sixty-four display pixels 2112 for illustrative purposes and is not intended to be limiting. A pixel array (e.g., pixel array 2110) may include any suitable number of pixels. Furthermore, the example mappings 2100, 2200, and 2300 are provided for illustrative purposes and are not intended to be limiting. It will be recognized that image pixels may be mapped to any suitable number and/or any suitable arrangement of display pixels. For instance, image pixels may be mapped to display pixels to enable a pixel array to provide any number of two-dimensional and/or three-dimensional images to viewer(s). For example, if three three-dimensional images are provided, each of the three three-dimensional images may use one-third of the display pixels in the pixel array. If four three-dimensional images are provided, each of the four three-dimensional images may use one-fourth of the display pixels in the pixel array, and so on.

As shown in FIG. 19, the method of flowchart 1900 begins at step 1902. In step 1902, a determination is made that a position of a user with respect to a pixel array is changed. The pixel array includes a plurality of display pixels. For example, a determination may be made that the user moves toward the pixel array, away from the pixel array, to the left or right with respect to the pixel array, up or down with respect to the pixel array, or another direction. In an example implementation, locator 1604 determines that the position of the user with respect to the pixel array is changed.

In an example embodiment, instead of (or in addition to) determining that the position of the user with respect to the pixel array is changed, a determination is made that an orientation of the user's head with respect to the pixel array is changed. For example, a determination may be made that the user's head is rotated from a substantially vertical orientation to a substantially horizontal orientation (as may occur if the user goes from a seated or standing position to a lying position), or vice versa. It will be recognized that the orientation of the user's head need not necessarily be substantially vertical or substantially horizontal. For instance, the orientation of the user's head may be at an angle between substantially vertical and substantially horizontal.

At step 1904, a configuration of an adaptable light manipulator is modified in response to determining that the position of the user with respect to the pixel array is changed. The adaptable light manipulator receives light from the pixel array. In an example implementation, manipulator controller 1602 modifies the configuration of the adaptable light manipulator.

At step 1906, subsets of the plurality of display pixels to which respective image pixels are rendered are changed to compensate for the configuration of the adaptable light manipulator being modified. For example, the subsets of the plurality of display pixels to which the respective image pixels are rendered may be changed in response to the configuration of the adaptable light manipulator being modified. In another example, the subsets of the plurality of display pixels to which the respective image pixels are rendered may be changed on-the-fly. In an example implementation, mapping module 1610 changes the subsets of the plurality of display pixels to which the respective image pixels are rendered.

In one example embodiment, step 1902 of flowchart 1900 is not performed. In accordance with this embodiment, the configuration of the adaptable light manipulator is modified at step 1904 even in the absence of determining that the position of the user with respect to the pixel array is changed.

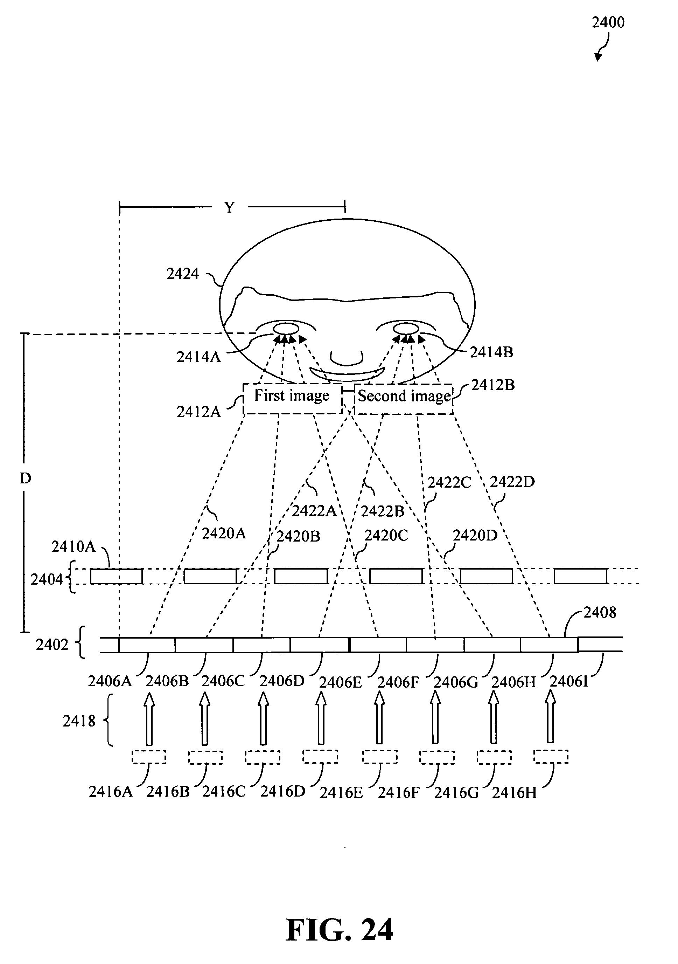

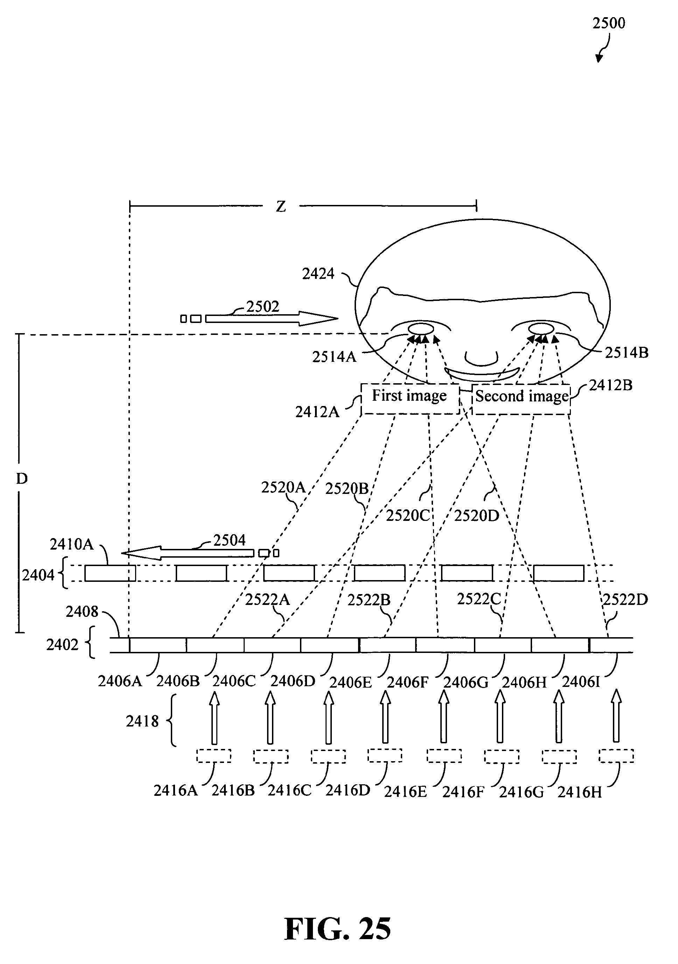

FIGS. 24 and 25 show cross-sectional views of display systems 2400 and 2500 in which a three-dimensional image is provided to a user based on respective first and second mappings of image pixels to display pixels according to example embodiments. Display systems 2400 and 2500 are example embodiments of system 200 shown in FIG. 2. As shown in FIG. 24, system 2400 includes a pixel array 2402 and an adaptable light manipulator 2404. Adaptable light manipulator 2404 is shown to be implemented as an adaptable parallax barrier for illustrative purposes and is not intended to be limiting. Adaptable light manipulator 2404 may be any suitable type of adaptable light manipulator.

Pixel array 2402 includes a plurality of subsets 2406A-2406I of display pixels arranged in a series. Further subsets of display pixels may be included in pixel array 2402 that are not visible in FIG. 24. Each of the display pixels in subsets 2406A-2406I generates light, which emanates from display surface 2408 of pixel array 2402 towards adaptable light manipulator 2404. Due to the spacing of subsets 2406A-2406I and the configuration of adaptable light manipulator 2404, image pixels 2416A-2416H are mapped to respective subsets 2406A-2406H, so that first and second images 2412A and 2412B are formed at respective locations 2414A and 2414B. For example, image pixel 2416A is rendered to subset 2406A; image pixel 2416B is rendered to subset 2406B; and so on. Light 2420A-2420D from respective subsets 2406A, 2406C, 24206E, and 2406G forms first image 2412A, and light 2422A-2422D from respective subsets 2406B, 2406D, 2406F, and 2406H forms second image 2412B. The first and second images 2412A and 2412B are combined to be perceived as a three-dimensional image by a user 2424 who is positioned a distance D from display surface 2408 of pixel array 2402 and a distance Y to the right of a left-most edge of subset 2406A.

It will be recognized that any of a variety of factors may affect the mapping of image pixels 2416A-2416H among subsets 2406A-2406I. Such factors may include but are not limited to changing the position of the user 2424 with respect to pixel array 2402, changing the spacing of subsets 2406A-2406I, and/or changing the configuration of adaptable light manipulator 2404.

For example, display system 2500 of FIG. 25 includes pixel array 2402 and adaptable light manipulator 2404 as shown in FIG. 24. However, the configuration of adaptable light manipulator 2404 shown in FIG. 25 differs from the configuration of adaptable light manipulator 2404 shown in FIG. 24 in that adaptable light manipulator 2404 is moved toward the left in FIG. 25, as indicated by arrow 2504. Moreover, the position of user 2424 as shown in FIG. 25 is moved to the right with respect to pixel array 2402, as compared to the position of user 2424 as shown in FIG. 24, as indicated by arrow 2502. For example, user 2424 is shown in FIG. 25 to be positioned a distance D from display surface 2408 of pixel array 2402 and a distance Z to the right of the left-most edge of subset 2406A, where Z > Y.

In the example embodiment of FIG. 25, adaptable light manipulator 2404 may be moved to the left in response to user 2424 moving to the right, though the scope of the embodiments is not limited in this respect. Regardless, the mapping of image pixels among subsets 2406A-2406I is changed in FIG. 25, as compared to the mapping shown in FIG. 24, to compensate for the changed position of user 2424 and the modified configuration of adaptable light manipulator 2404. As shown in FIG. 25, image pixels 2416A-2416H are mapped to respective subsets 2406B-2406I, rather than respective subsets 2406A-2406H, which enables first and second images 2412A and 2412B to be formed at respective locations 2514A and 2514B. For example, image pixel 2416A is rendered to subset 2406B; image pixel 2416B is rendered to subset 2406C; and so on. Light 2520A-2520D from respective subsets 2406B, 2406D, 24206F, and 2406H forms first image 2412A, and light 2522A-2522D from respective subsets 2406C, 2406E, 2406G, and 2406I forms second image 2412B. The first and second images 2412A and 2412B are combined to be perceived as a three-dimensional image by a user 2424.

In FIGS. 24 and 25, each of subsets 2406A-2406I is shown to include a single display pixel for illustrative purposes and is not intended to be limiting. It will be recognized that subsets 2406A-2406I may include any suitable number (e.g., 1, 2, 3, etc.) of display pixels. Moreover, the display pixels in each subset may be configured in any suitable arrangement. For instance, each subset may include one or more rows and/or one or more columns of display pixels.

As shown in FIG. 20, the method of flowchart 2000 begins at step 2002. In step 2002, a first plurality of image pixels that corresponds to an N-dimensional representation of an image is rendered to a plurality of display pixels in a pixel array. In an example implementation, mapping module 1610 renders the first plurality of image pixels to the plurality of display pixels.

At step 2004, a configuration of an adaptable light manipulator that receives light from the pixel array is changed. In an example implementation, manipulator controller 1602 changes the configuration of the adaptable light manipulator.

At step 2006, the first plurality of image pixels is converted to a second plurality of image pixels that corresponds to an M-dimensional representation of the image. M is not equal to N. For instance, the first plurality of image pixels may be converted to the second plurality of image pixels on-the-fly. In an example embodiment, M=2 and N=3. In another example embodiment, M=3 and N=2. In an example implementation, conversion module 1608 converts the first plurality of image pixels to the second plurality of image pixels.

At step 2008, the second plurality of image pixels is rendered to the plurality of display pixels in response to changing the configuration of the adaptable light manipulator. For instance, the second plurality of image pixels may be rendered in lieu of the first plurality of image pixels to the plurality of display pixels. In an example implementation, mapping module 1610 renders the second plurality of image pixels to the plurality of display pixels.

### III. Example Display Controller Implementations

Display controller 202, pixel array controller 204, and manipulator controller 206 may be implemented in hardware, software, firmware, or any combination thereof. For example, display controller 202, pixel array controller 204, and/or manipulator controller 206 may be implemented as computer program code configured to be executed in one or more processors. Alternatively, display controller 202, pixel array controller 204, and/or manipulator controller 206 may be implemented as hardware logic/electrical circuitry.

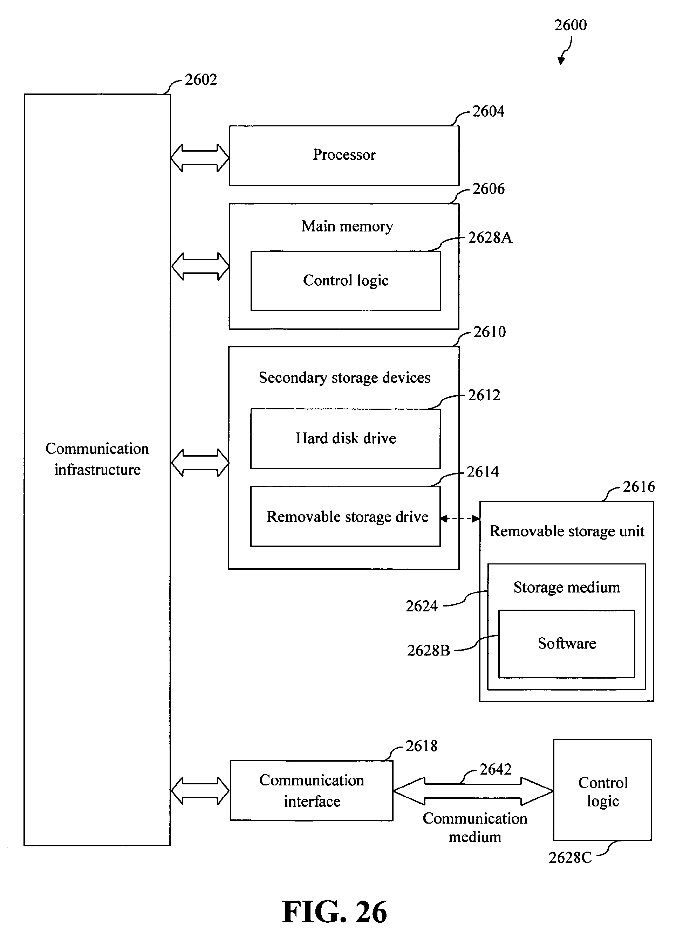

For instance, FIG. 26 shows a block diagram of an example implementation of display controller 202, according to an embodiment. In embodiments, display controller 202 may include one or more of the elements shown in FIG. 26. As shown in the example of FIG. 26, display controller 202 may include one or more processors (also called central processing units, or CPUs), such as a processor 2604. Processor 2604 is connected to a communication infrastructure 2602, such as a communication bus. In some embodiments, processor 2604 can simultaneously operate multiple computing threads.

Display controller 202 also includes a primary or main memory 2606, such as random access memory (RAM). Main memory 2606 has stored therein control logic 2628A (computer software), and data.

Display controller 202 also includes one or more secondary storage devices 2610. Secondary storage devices 2610 include, for example, a hard disk drive 2612 and/or a removable storage device or drive 2614, as well as other types of storage devices, such as memory cards and memory sticks. For instance, display controller 202 may include an industry standard interface, such a universal serial bus (USB) interface for interfacing with devices such as a memory stick. Removable storage drive 2614 represents a floppy disk drive, a magnetic tape drive, a compact disk drive, an optical storage device, tape backup, etc.

Removable storage drive 2614 interacts with a removable storage unit 2616. Removable storage unit 2616 includes a computer useable or readable storage medium 2624 having stored therein computer software 2628B (control logic) and/or data. Removable storage unit 2616 represents a floppy disk, magnetic tape, compact disk, DVD, optical storage disk, or any other computer data storage device. Removable storage drive 2614 reads from and/or writes to removable storage unit 2616 in a well known manner.

Display controller 202 further includes a communication or network interface 2618. Communication interface 2618 enables the display controller 202 to communicate with remote devices. For example, communication interface 2618 allows display controller 202 to communicate over communication networks or mediums 2642 (representing a form of a computer useable or readable medium), such as LANs, WANs, the Internet, etc. Network interface 2618 may interface with remote sites or networks via wired or wireless connections.

Control logic 2628C may be transmitted to and from display controller 202 via the communication medium 2642.

Any apparatus or manufacture comprising a computer useable or readable medium having control logic (software) stored therein is referred to herein as a computer program product or program storage device. This includes, but is not limited to, display controller 202, main memory 2606, secondary storage devices 2610, and removable storage unit 2616. Such computer program products, having control logic stored therein that, when executed by one or more data processing devices, cause such data processing devices to operate as described herein, represent embodiments of the invention.

Devices in which embodiments may be implemented may include storage, such as storage drives, memory devices, and further types of computer-readable media. Examples of such computer-readable storage media include a hard disk, a removable magnetic disk, a removable optical disk, flash memory cards, digital video disks, random access memories (RAMs), read only memories (ROM), and the like. As used herein, the terms "computer program medium" and "computer-readable medium" are used to generally refer to the hard disk associated with a hard disk drive, a removable magnetic disk, a removable optical disk (e.g., CDROMs, DVDs, etc.), zip disks, tapes, magnetic storage devices, MEMS (micro-electromechanical systems) storage, nanotechnology-based storage devices, as well as other media such as flash memory cards, digital video discs, RAM devices, ROM devices, and the like. Such computer-readable storage media may store program modules that include computer program logic for display controller 202, pixel array controller 204, manipulator controller 206, and/or display controller 1600 or any one or more elements thereof (e.g., manipulator controller 1602, locator 1604, pixel array controller 1606, conversion module 1608, and/or mapping module 1610), flowchart 900 (including any one or more steps of flowchart 900), flowchart 1100 (including any one or more steps of flowchart 1100), flowchart 1700 (including any one or more steps of flowchart 1700), flowchart 1800 (including any one or more steps of flowchart 1800), flowchart 1900 (including any one or more steps of flowchart 1900), and/or flowchart 2000 (including any one or more steps of flowchart 2000), and/or further embodiments of the present invention described herein. Embodiments of the invention are directed to computer program products comprising such logic (e.g., in the form of program code or software) stored on any computer useable medium. Such program code, when executed in one or more processors, causes a device to operate as described herein.

The invention can be put into practice using software, firmware, and/or hardware implementations other than those described herein. Any software, firmware, and hardware implementations suitable for performing the functions described herein can be used

### IV. Conclusion

While various embodiments have been described above, it should be understood that they have been presented by way of example only, and not limitation. It will be understood by those skilled in the relevant art(s) that various changes in form and details may be made to the embodiments described herein without departing from the spirit and scope of the invention. Accordingly, the breadth and scope of the present invention should not be limited by any of the above-described exemplary embodiments, but should be defined only in accordance with the following claims and their equivalents.

## Claims

1. A display system comprising:
a pixel array that includes a plurality of display pixels;
an adaptable light manipulator configured to manipulate light that is received from the pixel array;
a manipulator controller configured to modify a configuration of the adaptable light manipulator; and
a pixel array controller configured to change a mapping of a plurality of image pixels from a plurality of respective first subsets of the display pixels to a plurality of respective second subsets of the display pixels in the pixel array to compensate for modification of the configuration of the adaptable light manipulator.

2. The display system of claim 1, wherein each of the first subsets and each of the second subsets includes N display pixels; and
wherein N is an integer.

3. The display system of claim 1, wherein each of the first subsets includes N display pixels;
wherein each of the second subsets includes M display pixels;
wherein N and M are integers; and
wherein N is not equal to M.

4. The display system of claim 1, wherein the pixel array controller is configured to change the mapping of the plurality of image pixels to switch operation of the display system from a first mode in which the pixel array provides B three-dimensional images each of which uses a respective 1/B of the plurality of display pixels to a second mode in which the pixel array provides C three-dimensional images each of which uses a respective 1/C of the plurality of display pixels;
wherein B and C are integers; and
wherein B is not equal to C.

5. The display system of claim 1, further comprising:
a locator configured to determine that a position of a user with respect to the pixel array is changed;
wherein the manipulator controller is configured to modify the configuration of the adaptable light manipulator in response to determination that the position of the user with respect to the pixel array is changed; and
wherein the pixel array controller is configured to change the mapping of the plurality of image pixels from the plurality of respective first subsets of the display pixels to the plurality of respective second subsets of the display pixels in the pixel array in response to the determination that the position of the user with respect to the pixel array is changed.

6. The display system of claim 1, further comprising:
a locator configured to determine that an orientation of a user's head with respect to the pixel array is changed;
wherein the manipulator controller is configured to modify the configuration of the adaptable light manipulator in response to determination that the orientation of the user's head with respect to the pixel array is changed; and
wherein the pixel array controller is configured to change the mapping of the plurality of image pixels from the plurality of respective first subsets of the display pixels to the plurality of respective second subsets of the display pixels in the pixel array in response to the determination that the orientation of the user's head with respect to the pixel array is changed.

7. The display system of claim 1, wherein the adaptable light manipulator includes an adaptable parallax barrier; and
wherein the modification of the configuration of the adaptable light manipulator includes a modification of a slit pattern of the adaptable parallax barrier.

8. The display system of claim 1, wherein the adaptable light manipulator includes an elastic light manipulator; and
wherein the modification of the configuration of the adaptable light manipulator includes a modification of an extent to which the elastic light manipulator is stretched.

9. The display system of claim 1, wherein the modification of the configuration of the adaptable light manipulator includes a modification of an orientation of the adaptable light manipulator.

10. A display system comprising:
a pixel array that includes a plurality of display pixels;
an adaptable light manipulator configured to manipulate light that is received from the pixel array;
a manipulator controller configured to modify a configuration of the adaptable light manipulator; and
a pixel array controller comprising:
a conversion module configured to convert a first plurality of image pixels that corresponds to an N-dimensional representation of an image to a second plurality of image pixels that corresponds to an M-dimensional representation of the image, M ≠ N; and
a mapping module configured to initially render the first plurality of image pixels to the plurality of display pixels, the mapping module further configured to render the second plurality of image pixels in lieu of the first plurality of image pixels to the plurality of display pixels in response to a determination that the configuration of the adaptable light manipulator is modified.

11. A method comprising:
modifying a configuration of an adaptable light manipulator that receives light from a pixel array that includes a plurality of display pixels; and
changing a number of the display pixels in the pixel array that represents each image pixel of a plurality of image pixels in response to modifying the configuration of the adaptable light manipulator.

12. The method of claim 11, wherein modifying the configuration of the adaptable light manipulator comprises:
modifying a slit pattern of an adaptable parallax barrier.

13. The method of claim 11, wherein modifying the configuration of the adaptable light manipulator comprises:
modifying an extent to which an elastic light manipulator is stretched.

14. The method of claim 11, wherein changing the number of the display pixels in the pixel array that represents each image pixel of the plurality of image pixels comprises:
switching operation of the pixel array from a first mode in which the pixel array provides B three-dimensional images each of which uses a respective 1/B of the plurality of display pixels to a second mode in which the pixel array provides C three-dimensional images each of which uses a respective 1/C of the plurality of display pixels;
wherein B and C are integers; and
wherein B is not equal to C.

15. A method comprising:
modifying a configuration of an adaptable light manipulator that receives light from a pixel array that includes a plurality of display pixels; and
changing subsets of the plurality of display pixels to which respective image pixels are rendered to compensate for the configuration of the adaptable light manipulator being modified.
